# EUROPEAN PATENT APPLICATION

(11) **EP 4 517 909 A1**
(43) Date of publication of application: **05.03.2025**
(21) Application number: 23795887.1
(22) Date of filing: 24.02.2023
(51) Int. Cl.: H01M 10/0585, H01M 10/0562

(54) **SOLID STATE BATTERY MANUFACTURING METHOD AND SOLID STATE BATTERY MANUFACTURING DEVICE**

(30) Priority: 28.04.2022 JP 2022074650
(71) Applicant: Hitachi Zosen Corporation, Osaka-shi, Osaka 559-8559 (JP)
(72) Inventor: SUGIYO Takeshi, Osaka-shi, Osaka 559-8559 (JP)
(74) Representative: Grünecker Patent- und Rechtsanwälte PartG mbB
(86) International application number: PCT/JP2023/006853
(87) International publication number: WO 2023/210139

(57) **Abstract**

A disclosed solid-state battery manufacturing method includes: a placing step of placing a laminate (100) on a placement surface (210p) of a first die (210) so that a main surface (100SA1) of the laminate (100) is closer to the first die (210) than a main surface (100SA2); and a dividing step of dividing the laminate (100) by bringing a cutting edge (220a) of a second die (220) and the first die (210) closer to each other so that the cutting edge (220a) approaches the first die (210) from the main surface (100SA2) side. In the dividing step, the laminate (100) is divided by bringing the cutting edge (220a) and the first die (210) closer to each other within a range where at least one part of the cutting edge (220a) does not pass the position of the main surface (SA1).

## Description

### [Technical Field]

The present disclosure relates to a solid-state battery, a solid-state battery manufacturing method, and a solid-state battery manufacturing device.

### [Background Art]

Currently, solid-state batteries are attracting attention. A solid-state battery includes a laminate (power generation element) in which a solid electrolyte layer is disposed between a positive electrode current collector and a negative electrode current collector. When manufacturing solid-state batteries, a large-sized laminate including power generation elements for many batteries may be produced, and then the laminate may be divided to correspond to the individual batteries. Conventionally, various methods for dividing the laminate have been proposed.

PTL 1 (Japanese Laid-Open Patent Publication No. 2020-61258) discloses "a method of manufacturing a solid-state battery, including: a laminate pressing step of pressing a laminate in which a positive electrode layer, a negative electrode layer, and a solid electrolyte layer between the positive electrode layer and the negative electrode layer are laminated; and a shearing step of punching the laminate into a predetermined shape by shearing to form a plurality of single battery components".

PTL 2 (WO 2019/131503 A) discloses "a method of manufacturing an all-solid-state battery, including: a laminate forming step of forming a laminated body including a first electrode layer, a second electrode layer having a polarity opposite to that of the first electrode layer, and a solid electrolyte layer disposed between the first electrode layer and the second electrode layer; and a cut-off step of cutting off an outer peripheral edge of the laminated body, the laminated body containing a powder material".

### [Citation List]

### [Patent Literature]

PTL 1: Japanese Laid-Open Patent Publication No. 2020-61258
PTL 2: WO 2019/131503 A

### [Summary of Invention]

### [Technical Problem]

However, the method of punching out the laminate in a conventional shearing step as in PTL 1 has the problem of roughening the cut surface of the laminate and thereby increasing the likelihood of short circuits occurring between the positive electrode layer and the negative electrode layer. To address this issue, an object of the present disclosure is to provide a manufacturing method and a manufacturing device that are capable of manufacturing, with good yield, a solid-state battery that is less susceptible to short circuits between the positive electrode layer and the negative electrode layer.

### [Solution to Problem]

One aspect of the present disclosure relates to a solid-state battery manufacturing method. The manufacturing method is a solid-state battery manufacturing method using a laminate including a power generation element, the power generation element including a positive electrode layer, a negative electrode layer, and a solid electrolyte layer disposed between the positive electrode layer and the negative electrode layer, the laminate having a main surface SA1 and a main surface SA2 opposite to the main surface SA1, and the solid electrolyte layer having a main surface SB1 on the main surface SA1 side and a main surface SB2 on the main surface SA2 side, the manufacturing method including: a placing step of placing the laminate on a placement surface of a first die so that the main surface SA1 is closer to the first die than the main surface SA2; and a dividing step of dividing the laminate by bringing a cutting edge of a second die and the first die closer to each other so that the cutting edge of the second die approaches the first die from the main surface SA2 side, wherein in the dividing step, the laminate is divided by bringing the cutting edge and the first die closer to each other within a range where at least one part of the cutting edge does not pass a position of the main surface SA1.

Another aspect of the present disclosure relates to a solid-state battery manufacturing device. The manufacturing device is a solid-state battery manufacturing device that performs a step of dividing a laminate including a power generation element, the manufacturing device including: a first die on which the laminate is placed; a second die; and a drive mechanism for reversibly bringing the first die and the second die closer to each other, wherein the power generation element includes a positive electrode layer, a negative electrode layer, and a solid electrolyte layer disposed between the positive electrode layer and the negative electrode layer, the laminate has a main surface SA1 and a main surface SA2, the solid electrolyte layer has a main surface SB1 on the main surface SA1 side and a main surface SB2 on the main surface SA2 side, in a state where the laminate is placed on a placement surface of the first die so that the main surface SA1 is closer to the first die than the main surface SA2, the laminate is divided by the drive mechanism bringing a cutting edge of the second die and the first die closer to each other so that the cutting edge of the second die approaches the first die from the main surface SA2 side, and the laminate is divided by the drive mechanism bringing the cutting edge and the first die closer to each other within a range where at least one part of the cutting edge does not pass a position of the main surface SA1.

Matters described in two or more claims arbitrarily selected from claims set forth in the appended claims can be combined as long as such combinations are possible. Further, various configurations described in the following embodiments can be arbitrarily combined as long as such combinations are possible.

### [Advantageous Effects of Invention]

According to the present disclosure, it is possible to manufacture, with good yield, a solid-state battery that is less susceptible to short circuits between the positive electrode layer and the negative electrode layer.

Novel features of the present invention are set forth in the appended claims, but the present invention, both as to configuration and content, will be better understood from the following detailed description with reference to the drawings, together with other objects and features of the present invention.

### [Brief Description of Drawings]

FIG. 1 is a sectional view schematically illustrating an example of a laminate to be divided by a manufacturing method of a first embodiment.
FIG. 2A is a sectional view schematically illustrating a step of the manufacturing method of the first embodiment.
FIG. 2B is a sectional view schematically illustrating an example of a step subsequent to the step of FIG. 2A.
FIG. 3 is a top view schematically illustrating the step of FIG. 2A.
FIG. 4 is a sectional view schematically illustrating another example of the step subsequent to the step of FIG. 2A.
FIG. 5 is a view schematically illustrating an example of a manufacturing device of the first embodiment.
FIG. 6 is a view schematically illustrating a part of another example of the manufacturing device of the first embodiment.

### [Description of Embodiments]

Embodiments of the present disclosure are described below using examples, but the present disclosure is not limited to the examples described below. In the following description, specific numerical values and materials may be exemplified, but other numerical values and other materials may be applied as long as the invention of the present disclosure can be practiced. In this specification, a phrase "numerical value A to numerical value B" includes numerical value A and numerical value B and can be read as "numerical value A or more and numerical value B or less". In the following description, when numerical lower limits and upper limits for specific physical properties, conditions, or the like are exemplified, any of the exemplified lower limits can be arbitrarily combined with any of the exemplified upper limits as long as the lower limit is not the upper limit or more.

A manufacturing method according to the present embodiment will be described below. The manufacturing method may be referred to as "manufacturing method (M)" below. Examples of solid-state batteries manufactured by the manufacturing method (M) include batteries known by names such as all-solid-state batteries, semi-solid-state batteries, pseudo-solid-state batteries, and all-resin batteries.

The manufacturing method (M) is particularly preferably used for manufacturing all-solid-state batteries. An embodiment with respect to an all-solid-state battery will be mainly described below, but when manufacturing a solid-state battery other than an all-solid-state battery, a power generation element of the corresponding solid-state battery can be used as the power generation element. In the following description, except for descriptions that are applicable only to specific batteries, "all-solid-state battery" may be read as "solid-state battery" as long as there is no contradiction in the description. In addition, "all-solid-state batteries" are sometimes referred to as "solid-state batteries" commonly. Therefore, in the following description, "all-solid-state battery" may be read as "solid-state battery" as long as there is no contradiction in the description.

Furthermore, the present disclosure relates to a solid-state battery (for example, an all-solid-state battery) manufactured by the manufacturing method (M). Divided surfaces of power generation elements divided by a dividing step described below are less susceptible to short circuits than divided surfaces of power generation elements divided by a normal shearing step. Therefore, the solid-state battery is less susceptible to short circuits or the like even after manufacture and is highly reliable.

In this specification, examples of the solid-state battery include batteries that do not contain a liquid component as a constituent of an electrolyte. For example, examples of the solid-state battery include batteries that do not contain a liquid component as a constituent necessary for the batteries to function, and include, for example, batteries that do not contain a liquid component. Here, the "liquid component" means a component that is liquid at room temperature (25°C). Further, examples of the solid-state battery include batteries generally referred to as all-solid-state batteries or semi-solid-state batteries. Furthermore, examples of the solid-state battery also include batteries generally referred to as pseudo-solid-state batteries. That is, the solid-state battery may contain a trace amount of liquid component.

### (Manufacturing Method (M))

The manufacturing method (M) according to the present embodiment is a solid-state battery manufacturing method using a laminate including a power generation element. The power generation element includes a positive electrode layer, a negative electrode layer, and a solid electrolyte layer disposed between the positive electrode layer and the negative electrode layer. The laminate has a main surface SA1 and a main surface SA2 opposite to the main surface SA1. The solid electrolyte layer has a main surface SB1 on the main surface SA1 side and a main surface SB2 on the main surface SA2 side.

The manufacturing method (M) includes a placing step and a dividing step in this order. The placing step is a step of placing the laminate on a placement surface of a first die so that the main surface SA1 is closer to the first die than the main surface SA2. The dividing step is a step of dividing the laminate by bringing a cutting edge of a second die and the first die closer to each other so that the cutting edge of the second die approaches the first die from the main surface SA2 side. Note that the cutting edge of the second die refers to a portion (corner) of the second die that comes into contact with the laminate to divide the laminate in the dividing step.

In the dividing step, the following conditions (1) and/or (2) is satisfied. In the dividing step, the following conditions (2) and/or (3) may be satisfied, or the following conditions (2) and/or (4) may be satisfied.
(1) In the dividing step, the laminate is divided by bringing the cutting edge and the first die closer to each other within a range where at least one part (hereinafter also referred to as "one part (P)") of the cutting edge of the second die does not pass the position of the placement surface (a surface in contact with the main surface SA1 of the laminate) of the first die.
(2) In the dividing step, the laminate is divided by bringing the cutting edge and the first die closer to each other within a range where the at least one part (P) of the cutting edge of the second die does not pass the position of the main surface SA1 of the laminate. In this case, when the cutting edge and the first die are closest to each other, the one part (P) is at the same position as the main surface SA1, or at a position between the main surface SA1 and the main surface SA2.
(3) In the dividing step, the laminate is divided by bringing the cutting edge of the second die and the first die closer to each other within a range where the at least one part (P) of the cutting edge of the second die does not reach the position of the main surface SB1 of the solid electrolyte layer. This configuration can particularly suppress short circuits between the positive electrode layer and the negative electrode layer. In this case, a closest position of the one part (P) can be located further away from the placement surface of the first die than the main surface SB1 of the solid electrolyte layer.
(4) In the dividing step, the laminate is divided by bringing the cutting edge of the second die and the first die closer to each other within a range where the at least one part (P) of the cutting edge of the second die does not reach the position of the main surface SB2 of the solid electrolyte layer. This configuration can particularly suppress short circuits between the positive electrode layer and the negative electrode layer. In this case, the closest position of the one part (P) can be located further away from the placement surface of the first die than the main surface SB2 of the solid electrolyte layer.

The "range not passing the position of the placement surface of the first die" in the condition (1) includes a case where a reach position of the cutting edge is at the position of the placement surface of the first die. The "range not passing the position of main surface SA1" in the condition (2) includes a case where the reach position of the cutting edge is at the position of the main surface SA1. In the dividing step, the one part (P) moves toward the main surface SA1 beyond the main surface SA2. That is, in the dividing step, the one part (P) moves within a range passing the main surface SA2 and not passing the main surface SA1.

The dividing step may satisfy the following condition (1') instead of the condition (1), and may satisfy the following condition (2') instead of the condition (2). That is, in description of this specification, the condition (1) may be replaced with the condition (1'), and the condition (2) may be replaced with the condition (2').
(1') In the dividing step, the laminate is divided by bringing the cutting edge and the first die closer to each other in a range where the at least one part (P) of the cutting edge of the second die does not reach the position of the placement surface of the first die. (2') In the dividing step, the laminate is divided by bringing the cutting edge and the first die closer to each other in a range where the at least one part (P) of the cutting edge of the second die does not reach the position of the main surface SA1 of the laminate.

Note that the above positions refer to coordinate positions when the direction in which the die moves in the dividing step is taken as a coordinate axis. This also applies to the following description, for example, the description of conditions (5) to (7) described below.

In PTL 1, the laminate (power generation element) is punched into a predetermined shape by shearing to form a plurality of single battery components. However, when the laminate including the power generation element is cut using conventional shearing methods, a cut surface is roughened, and short circuits are likely to occur.

In conventional shearing methods, a workpiece is sheared by moving an upper die so that a cutting edge of a lower die and a cutting edge of the upper die pass each other. Since laminates constituting solid-state batteries are thin, it was not considered that the workpiece could be divided by any method other than conventional shearing methods as common technical knowledge to those skilled in the art. However, the inventors of the present application have newly discovered that the laminates can be divided by a method completely different from conventional shearing methods, and that this can suppress short circuits between the positive electrode layer and the negative electrode layer. The present disclosure is based on this new finding.

In the dividing step of the manufacturing method (M), the cutting edge of the second die does not cross the laminate in its thickness direction. Further, compared to conventional shearing steps, in the dividing step of the manufacturing method (M), a divided surface of the laminate is less rubbed by the first die and/or the second die. Therefore, roughening of the divided surface during dividing can be suppressed, and as a result, short circuits between the positive electrode layer and the negative electrode layer can be suppressed. That is, according to the manufacturing method (M), solid-state batteries with high characteristics can be manufactured with good yield. An example of the placing step and an example of the dividing step are described below.

### (Placing Step)

As described above, the placing step is a step of placing the laminate on the placement surface of the first die so that the main surface SA1 of the laminate is closer to the first die than the main surface SA2 of the laminate. In other words, the laminate is placed so that the main surface SA2 of the laminate is closer to the second die than the main surface SA1.

In the placing step, the laminate may be placed so that the positive electrode layer is closer to the main surface SA1 than the negative electrode layer. Alternatively, the laminate may be placed so that the negative electrode layer is closer to the main surface SA1 than the positive electrode layer.

### (Dividing Step)

As described above, the dividing step is a step of dividing the laminate by bringing the cutting edge of the second die and the first die closer to each other so that the cutting edge of the second die approaches the first die from the main surface SA2 side.

In the dividing step, the laminate is divided at a linear dividing position. At the dividing position, a shoulder of the first die and the cutting edge of the second die approach each other. Thus, the cutting edge of the second die contacts the laminate, and the laminate between the shoulder of the first die and the cutting edge of the second die is divided. From one perspective, the shoulder of the first die is a cutting edge of the first die.

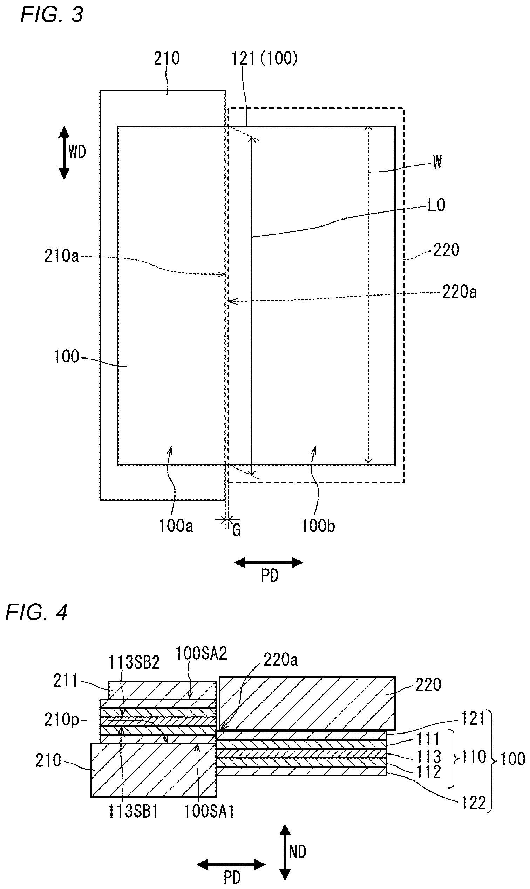

The linear dividing position is usually linear when viewed from above the laminate (see FIG. 3). However, as long as the laminate can be divided, the dividing position does not have to be linear, and may include linear and non-linear portions. The dividing position may include a curve or may be bent when viewed from above the laminate (see FIG. 3). The dividing position may be curved. The dividing position may be bent at an angle greater than 90°. The shape of the dividing position can be changed by changing the shape of the shoulder of the first die and the shape of the cutting edge of the second die. For example, the shape of the dividing position can be made linear by shaping the shoulder of the first die and the cutting edge of the second die with linear shapes.

**In** one example of a typical placement of the first and second dies, the first die is the lower die, and the second die is the upper die. In this case, the second die can be brought closer to the first die by moving the second die downward. However, as long as the dividing step can be performed, the placement of the first die and the second die is not limited to this typical placement. For example, the first die may be the upper die, and the second die may be the lower die. Alternatively, both may be placed in a horizontal direction.

Typically, when the cutting edge of the second die and the first die are brought closer to each other, only the second die is moved. Therefore, the following mainly describes a case where only the cutting edge of the second die is moved. However, as long as the dividing step can be performed, the cutting edge of the second die and the first die may be brought closer to each other by moving only the first die toward the second die. Alternatively, the cutting edge of the second die and the first die may be brought closer to each other by moving both the first die and the second die.

In the dividing step, an approach speed between the first die and the second die (for example, a moving speed of the second die) may be in a range of 10 to 1000 mm/s (preferably 70 to 700 mm/s). By setting the approach speed in this range, the dividing step is easy to perform appropriately.

In the dividing step, when the second die is to be stopped at the closest position, the speed of the second die may be gradually reduced, or the speed of the second die may be suddenly reduced. By suddenly reducing the speed of the second die, the laminate is easily divided appropriately. In order to suddenly reduce the moving speed of the second die at the closest position, the second die may be moved using a drive mechanism that does not include a crank mechanism. Examples of such drive mechanisms include hydraulic drive mechanisms and pneumatic drive mechanisms. Alternatively, in order to suddenly reduce the moving speed of the second die at the closest position, a stopper may be used to stop the second die at the closest position.

As the first and second dies, the first and second dies described in relation to a manufacturing device (D) described later can be used.

In the dividing step, the one part (P) of the cutting edge of the second die moves to a position closer to the main surface SA1 (the placement surface of the first die) than the position of the main surface SA2 of the laminate. Specifically, the closest position of the one part (P) is at the position of the main surface SA1, or a position between the position of the main surface SA1 and the main surface SA2. The placement surface of the first die is a surface on which the laminate is placed and is the surface in contact with the main surface SA1 of the laminate.

The closest position of the one part (P) of the cutting edge of the second die is a position of the one part (P) when the one part (P) comes closest to the placement surface of the first die in the dividing step. In an example of a case where the drive mechanism includes a crank mechanism, the position of the one part (P) at bottom dead center corresponds to the closest position.

When the dividing step satisfies at least one of the above conditions (1) to (4), the dividing step may further satisfy any of the following conditions (5), (6), and (7) as long as it does not contradict the above conditions. In the following description, the "main surface SA1 of the laminate" may be replaced with the "placement surface of the first die". (5) In the dividing step, the closest position of the at least one part (P) of the cutting edge of the second die is located closer to the main surface SA1 of the laminate than the position of the main surface SA2 of the laminate and farther from the first die than the position of the main surface SB2 of the solid electrolyte layer.
(6) In the dividing step, the at least one part (P) of the cutting edge of the second die moves to the position of the main surface SB2 of the solid electrolyte, or moves to a position on the placement surface side relative to the position of the main surface SB2. For example, in the dividing step, the closest position of the at least one part (P) of the cutting edge of the second die may be at the position of the main surface SB2 of the solid electrolyte layer, or at the position on the placement surface side relative to the position of the main surface SB2.
(7) In the dividing step, the at least one part (P) of the cutting edge of the second die moves to the position of the main surface SB1 of the solid electrolyte, or moves to a position on the placement surface side relative to the position of the main surface SB1. For example, in the dividing step, the closest position of the at least one part (P) of the cutting edge of the second die may be at the position of the main surface SB1 of the solid electrolyte layer, or at the position on the placement surface side relative to the position of the main surface SB1.

In the description of the conditions (1) to (7), the position of a main surface means the position of a main surface in the laminate placed on the placement surface of the first die. The laminate may include only one power generation element, or may include a plurality of stacked power generation elements. When the laminate includes a plurality of power generation elements, the main surfaces SB1 and SB2 mean the main surfaces of the solid electrolyte layer of any one of the power generation elements included in the laminate. For example, the main surfaces SB1 and SB2 may be the main surfaces of the solid electrolyte layer closest to the main surface SA1, or the main surfaces of the solid electrolyte layer closest to the main surface SA2.

As described above, the dividing step is performed so that the position of the at least one part (P) of the cutting edge is at the above predetermined position. In a preferred example, the dividing step is performed so that most of the cutting edge or the entire cutting edge is at the predetermined position mentioned above. Therefore, in this specification, the phrase "at least one part (or one part (P)) of the cutting edge" may be replaced with "the cutting edge" as long as there is no contradiction in the description.

A ratio L1/L0 of a length L1 of the at least one part (P) of the cutting edge to a length (total length) L0 of the cutting edge may be 0.5 or more, 0.6 or more, 0.7 or more, 0.8 or more, 0.9 or more, or 0.95 or more, and is 1.0 or less. In one example, the ratio L1/L0 is 1.0.

As an example, consider a case where the main surfaces of the layers of the laminate are not curved and are parallel to each other, and the cutting edge of the second die is parallel to the main surfaces of the layers of the laminate and extends linearly. In this case, when the dividing step is performed by moving the cutting edge of the second die while maintaining a state in which the cutting edge of the second die is parallel to the main surfaces of the layers of the laminate, the ratio L1/L0 can be 1.0.

When the cutting edge of the second die is not parallel to the main surfaces of the layers of the laminate, the ratio L1/L0 may be less than 1.0. Also, when the cutting edge of the second die is not linear, the ratio L1/L0 may be less than 1.0. For example, when a projected shape of the cutting edge of the second die projected onto a plane perpendicular to a direction PD described below is curved, the ratio L1/L0 may be less than 1.0. In the dividing step, the cutting edge other than the one part (P) may be located farther from the first die than the one part (P), or may be located in the opposite direction. For example, in the dividing step, at least one part of the cutting edge other than the one part (P) may pass the position of the main surface SA1. Even in this case, an effect of the manufacturing method (M) can be obtained in the one part (P).

The manufacturing method (M) may further include, before the placing step, a step of measuring a distance (an interlayer distance) between a main surface (for example, the main surface SA1 or the main surface SA2) of the laminate and a main surface (for example, the main surface SB1 or the main surface SB2) of a layer constituting the laminate, and adjusting a moving range of the cutting edge of the second die based on the obtained measured value. By performing this step, it is possible to move the cutting edge of the second die accurately within a desired range. A method for adjusting the moving range of the cutting edge of the second die will be described later. The interlayer distance may be measured, for example, from an image obtained by photographing a cross-section of the laminate with an electron microscope or the like. Thus, a ratio of thicknesses of layers can be calculated. Note that the calculated ratio of the thicknesses of the layers may be used as a reference ratio. For example, in a mass production process, a thickness of the laminate to be divided may be measured by a known method, and the moving range of the cutting edge of the second die may be adjusted based on the measured thickness and the reference ratio.

When the positive electrode layer and the negative electrode layer are short-circuited in the dividing step, the yield in production may decrease, or the reliability and long-term characteristics of the laminate after division may decrease. Therefore, the dividing step is preferably performed in a state where the positive electrode layer and the negative electrode layer are prevented from being short-circuited.

**In** the dividing step, at least one of the following conditions (a) to (c) may be satisfied. For example, any one of the conditions (a) to (c) may be satisfied, or two of them may be satisfied. For example, the conditions (a) and (b) may be satisfied, the conditions (a) and (c) may be satisfied, or the conditions (b) and (c) may be satisfied. Alternatively, all of the conditions (a) to (c) may be satisfied.
(a) The dividing step is performed in a state where the first die and the second die are electrically insulated.
(b) The placement surface of the first die is formed of an insulating material.
(c) A surface of the second die that comes into contact with the laminate in the dividing step is formed of an insulating material.

When the closest position of the cutting edge of the second die is on the main surface SA2 side of the laminate relative to the main surface SB1 of the solid electrolyte layer, the second die will not come into contact with the positive electrode layer and the negative electrode layer simultaneously in the dividing step. When the second die will not come into contact with the positive electrode layer and the negative electrode layer simultaneously in the dividing step, short circuits can be prevented between the positive electrode layer and the negative electrode layer by satisfying the condition (a) and/or the condition (b). When the closest position of the cutting edge of the second die is on the main surface SA1 side of the laminate relative to the main surface SB1 of the solid electrolyte layer, the second die may come into contact with the positive electrode layer and the negative electrode layer simultaneously in the dividing step. Even in this case, short circuits can be prevented between the positive electrode layer and the negative electrode layer by satisfying the condition (c). Note that in either case, when the condition (c) is satisfied, short circuits can be prevented between the positive electrode layer and the negative electrode layer in the dividing step.

To satisfy the condition (b) and/or the condition (c), the first die and/or the second die may be formed of an insulating material. Alternatively, the surface of the first die and/or the surface of the second die may be coated with an insulating material. Examples of the insulating material include insulating inorganic compounds (for example, oxides, nitrides, and ceramics). Examples of the insulating inorganic compounds include insulating metal compounds (for example, metal oxides and metal nitrides).

In the dividing step, the laminate is preferably divided while the laminate is fixed to the placement surface of the first die. With this configuration, the laminate can be divided accurately and appropriately at the dividing position. Furthermore, with this configuration, since roughness of the divided surface can be reduced, short circuits can be particularly suppressed between the positive electrode layer and the negative electrode layer.

There is no particular limitation on a method for fixing the laminate, and as long as the laminate can be fixed, a method of pressing the laminate with a member (for example, a pressing plate), a vacuum adsorption method, or the like may be used. In the placing step, the laminate can be fixed to the placement surface of the first die, and the division step can be performed in this state.

Typically, the dividing step is performed in a state where a portion of the laminate protruding from the placement surface of the first die is not fixed.

The laminate may further include at least one metal layer. The metal layer may be a layer containing metal particles, or may be a metal layer formed by a gas phase method (such as a vapor deposition method or a sputtering method) or a liquid phase method. Alternatively, the metal layer may be a metal foil. The laminate may include only one metal layer, or may include a plurality of metal layers. The metal layer may be disposed on the surface of the laminate, or may be disposed inside the laminate. For example, when the laminate includes a plurality of stacked power generation elements, the metal layer may be disposed between adjacent power generation elements.

The at least one metal layer may include at least one metal foil arranged on the main surface SA1 and/or the main surface SA2. In this case, an exposed surface of the metal foil is a main surface of the laminate. The metal layer may be disposed to cover the entire surface (or almost the entire surface) of at least one main surface (one surface or both surfaces) of the power generation element.

When the laminate includes a metal foil, the metal foil may be disposed at a position where the cutting edge of the second die passes. For example, when the laminate includes a metal foil disposed on only one surface, the dividing step may be performed in a state where the laminate is placed so that the surface of the metal foil is the main surface SA2.

When a metal layer (for example, a metal foil) is disposed on only one side of the power generation element, the metal layer may be disposed on the positive electrode layer side or the negative electrode layer side. For example, the laminate may have a laminate structure of metal layer/positive electrode layer/solid electrolyte layer/negative electrode layer, or may have a laminate structure of metal layer/negative electrode layer/solid electrolyte layer/positive electrode layer. Note that the power generation element itself is also a laminate having a laminate structure of positive electrode layer/solid electrolyte layer/negative electrode layer. When metal layers are disposed on both sides of the power generation element, the laminate has a laminate structure of metal layer/positive electrode layer/solid electrolyte layer/negative electrode layer/metal layer. Note that these laminates may include a layer other than the above layers between the above layers.

With the laminate placed on the placement surface of the first die, electrical characteristics between the main surface SA1 and the main surface SA2 may be measured. The electrical characteristics to be measured may be characteristics for determining whether a short circuit has occurred between the positive electrode layer and the negative electrode layer. Examples of such electrical characteristics include electrical resistance and voltage. The electrical characteristics may be measured after the dividing step, or may be measured before and after the dividing step. Alternatively, the dividing step may be performed while measuring the electrical characteristics. By measuring the electrical characteristics, it can be determined whether a short circuit has occurred in the dividing step.

In the manufacturing method (M), a laminate larger than a size (hereinafter sometimes referred to as "final size") of the laminate used in one solid-state battery is divided in the dividing step. The laminate is ultimately divided to the final size. The manufacturing method (M) includes one placing step and one dividing step, but the placing step and the dividing step may be repeated a plurality of times.

In a typical example, a laminate having a size in which final sizes are arranged in a matrix is divided into a plurality of strip-shaped laminates through multiple dividing steps. Subsequently, the dividing step is repeated for each strip-shaped laminate to obtain a plurality of laminates of the final size. In another example, a laminate slightly larger than the final size is prepared, and an end portion of the laminate is divided and removed in the dividing step to obtain a laminate of the final size. The number of laminates of the final size formed from an initial laminate is 1 or more, or 2 or more, and may be in a range of 1 to 1000 (for example, in a range of 1 to 100 or 2 to 100).

There is no limitation on a planar shape of the laminate placed in the placing step and a planar shape of the laminate of the final size. These planar shapes are preferably shapes constituted of straight sides and may be rectangular (square or oblong) or rhombic. There is no limitation on the size of the planar shape of the laminate of the final size, and each side of the planar shape may be 1 cm or more and 50 cm or less. The planar shape of the laminate of the final size may have a size within a square with one side having a side length in a range of 1 cm to 50 cm (for example, in a range of 1 cm to 30 cm or 1 cm to 20 cm).

There are no particular limitations on materials and formation methods of the laminate. For example, known materials and formation methods may be applied to the materials and formation methods of the positive electrode layer, the negative electrode layer, and the solid electrolyte layer. The power generation element may be formed only of the positive electrode layer, the negative electrode layer, and the solid electrolyte layer. Alternatively, the power generation element may include other layers as long as the laminate can be divided in the dividing step. Examples of such other layers include a thin conductive layer composed of a material containing a conductive powder.

The manufacturing method (M) may include a preparation step of preparing the laminate prior to the placing step. The preparation step may be a step of preparing the laminate from the materials, or a step of obtaining an already produced laminate. When preparing the laminate from the materials, the laminate is preferably formed by a production method including a step of pressing the materials constituting the laminate. An example of a method for producing the laminate will be described below.

In the preparation step, the laminate may be prepared by stacking the materials of the positive electrode layer, the solid electrolyte layer, and the negative electrode layer, and then pressing (finally pressing) the stacked materials together. At this time, the materials of the respective layers and a metal foil may be stacked and pressed together. For example, in one example of the preparation step, the laminate is formed by stacking the material of the positive electrode layer, the material of the solid electrolyte layer, and the material of the negative electrode layer (and a metal foil if necessary) on the metal foil in a predetermined order, and then pressing (finally pressing) the stacked materials and the one or two metal foils together. This formation method is preferably used when producing the laminate for an all-solid-state battery. By this final pressing, the one or two metal foils and the layers are integrated to obtain the laminate. A pressure of the final pressing may be appropriately changed depending on the material, thickness, and the like, and may be 50 MPa or more and 5000 MPa or less (for example, 300 MPa or more and 3000 MPa or less). When the positive electrode layer is laminated on the metal foil, a metal foil that serves as a positive electrode current collector is used as the metal foil. When the negative electrode layer is laminated on the metal foil, a metal foil that serves as a negative electrode current collector is used as the metal foil. Note that it is also possible to obtain the laminate by forming a power generation element and then integrating the power generation element with at least one metal foil.

At any stage after the material for the positive electrode layer is placed, after the material for the solid electrolyte layer is placed, or after the material for the negative electrode layer is placed, the placed material or materials may be preliminarily pressed. The preliminary pressing is usually performed at a pressure lower than the pressure of the final pressing described above. There is no particular limitation on the pressure of the preliminary pressing, and the pressure may be in a range of 1 MPa to 10 MPa. At least a part of the process of forming the laminate may be performed under reduced pressure in order to reduce voids in the laminate.

In the preparation step, at least one layer selected from the group consisting of the positive electrode layer, the solid electrolyte layer, and the negative electrode layer may be formed using a material that does not contain a liquid component (for example, a material containing a powder and not containing a liquid component). For example, all layers constituting the power generation element may be formed using materials that do not contain a liquid component, or all layers constituting the laminate may be formed using materials that do not contain a liquid component. As a method for placing materials that do not contain a liquid component (dispersion medium) in layers, an electrostatic spray method, a squeegee film formation method, an electrostatic painting method, or the like may be used. By forming the laminate using a method (a dry method) of pressing the materials that do not contain a liquid component, a laminate that is easy to divide in the dividing step can be obtained.

At least one layer (for example, all layers) selected from the group consisting of the positive electrode layer, the solid electrolyte layer, and the negative electrode layer may be formed using a mixture (for example, a slurry) containing a material constituting the layer and a liquid component. In this case, each layer, and the laminate, can be formed, for example, by applying, drying, and pressing the mixture. Even when a mixture containing a liquid component is used, a laminate that is easy to divide in the dividing step can be obtained by drying (removing the liquid component) and/or pressing. There is no particular limitation on the liquid component, and a known liquid component (dispersion medium) used to form a known power generation element may be used. Examples of the liquid component include butyl butyrate, dibutyl ether, heptane, water, ethanol, acetone, tetrahydrofuran, and N-methyl-2-pyrrolidone.

Note that as long as the laminate can be divided in the dividing step, there is no particular limitation on methods for forming the laminate and the layers constituting the laminate. For example, any of the layers may be formed by a thermal spraying method or other methods.

A proportion of powder material in at least one layer (for example, all layers) constituting the power generation element may be 50 mass% or more, or 70 mass% or more, and may be 100 mass% or less. When the power generation element includes a layer in which the proportion of powder material is 50 mass% or more, the power generation element is highly brittle and easy to divide in the dividing step. The proportion of powder material in the positive electrode layer, the proportion of powder material in the negative electrode layer, and the proportion of powder material in the solid electrolyte layer may each be within ranges specified by lower and upper limits of the proportion of powder material mentioned above. The powder material may be a powder of an inorganic material, or a mixture of a powder of an inorganic material and a powder of an organic material.

The material of at least one layer (for example, all layers) selected from the group consisting of the positive electrode layer, the solid electrolyte layer, and the negative electrode layer may or may not contain a binder. From the viewpoint of facilitating the dividing step, it is preferable that the material does not contain a binder or contains only a small amount of binder. As long as the dividing step can be performed, the binder content in each layer may be 10 mass% or less (for example, 5 mass% or less or 3 mass% or less), or may be more than that. When the material contains a binder, there is no particular limitation on the binder, and a known binder used to form a known power generation element may be used. Examples of the binder include rubbers such as styrenebutadiene rubber and butylene rubber, polyvinylidene fluoride polymers, and acrylic resins.

Note that the material for each layer to be pressed by the final pressing may be placed in a layered state in advance. That is, when forming the power generation element, at least one layer selected from the group consisting of the positive electrode layer, the solid electrolyte layer, and the negative electrode layer may be formed as a single layer by drying and/or pressing the material in advance. Furthermore, the single layer may be placed on a metal foil or another layer and subjected to the final pressing to form the laminate.

The laminate may be a laminate formed by pressing without heating at a high temperature (for example, 100°C or higher). For example, the laminate may not be a sintered body. Alternatively, the preparation step may include a step of heating and firing the material and/or the laminate at a high temperature during and/or after pressing the material.

The laminate can be prepared as described above. However, the laminate may be prepared by a method other than those described above.

A thickness of the metal layer (for example, the metal foil) may be in a range of 1 µm to 50 µm (for example, in a range of 5 µm to 20 µm).

A thickness of the power generation element may be in a range of 100 µm to 1000 µm (for example, in a range of 200 µm to 800 µm). When the power generation element of such a thickness is cut by shearing, short circuits due to rough cut surfaces are particularly likely to occur. A thickness of the positive electrode layer may be in a range of 50 µm to 500 µm (for example, in a range of 100 µm to 300 µm). A thickness of the solid electrolyte layer may be in a range of 10 µm to 300 µm (for example, in a range of 30 µm to 100 µm). A thickness of the negative electrode layer may be in a range of 50 µm to 500 µm (for example, in a range of 100 µm to 300 µm). The manufacturing method (M) is preferably used for manufacturing a solid-state battery using a thin power generation element.

The laminate can be divided in the dividing step described above. The laminate is divided to the final size and then used to manufacture a solid-state battery. By the manufacturing method (M), it is possible to manufacture a solid-state battery that includes a laminate with a power generation element. The power generation element can have an end surface formed in the dividing step on at least one side surface of the laminate.

There is no particular limitation on a method for preparing a solid-state battery using a laminate obtained in the dividing step, and a known method may be used. When the laminate does not include a metal layer (current collector), the manufacturing method (M) may include a step of placing a metal layer on the surface of the laminate. **In** one example of the manufacturing method (M) in which the prepared laminate has a metal layer placed on only one side of the power generation element, first, another current collector is formed on a side of the laminate where the metal layer is not formed, to form a power generation body (laminate) including a laminate structure of metal layer/power generation element/current collector. The other current collector may be a metal foil, a vapor deposition layer, or the like. When a laminate having metal layers placed on both sides of the power generation element is prepared in the preparation step, a divided laminate can be used as the power generation body as it is.

Subsequently, a positive electrode lead and/or a negative electrode lead is connected to the obtained power generation body as necessary, and then the power generation body is housed in an outer casing to obtain a solid-state battery. The power generation body may be pressurized in a stacking direction before or after being housed in the outer casing. The solid-state battery may include only one laminate described above, or may include a power generation body including a plurality of laminates stacked together. **In** addition, formation of the other current collector described above may be omitted.

There is no particular limitation on the outer casing, and a known outer casing may be used. The outer casing may include a case and/or a bag-shaped body formed of a film. For example, the power generation body may be enclosed in a bag-shaped body formed of a laminate film, and the bag-shaped body enclosing the power generation body may be further housed in a case. In this case, the power generation body may be enclosed in the bag-shaped body with an inside of the bag-shaped body or the case decompressed.

Examples of constituents of the solid-state battery manufactured in the present embodiment will be described below. However, the constituents below are merely examples, and solid-state batteries using other constituents can also be manufactured by the manufacturing method of the present embodiment. Note that the following mainly describes an example in which the solid-state battery is an all-solid-state battery (particularly an all-solid-state lithium-ion battery).

### (Positive Electrode Layer)

The positive electrode layer contains a positive electrode active material, and may contain other components as necessary. Examples of the other components include known components used for a positive electrode in an all-solid-state battery. From the viewpoint of increasing lithium ion conductivity in the positive electrode layer, the positive electrode layer preferably contains the positive electrode active material and a solid electrolyte exhibiting lithium ion conductivity. The solid electrolyte is not particularly limited as long as it exhibits lithium ion conductivity, and a solid electrolyte used for a solid electrolyte layer in a solid-state battery can be used. Normally, the positive electrode active material is used in the form of particles (powder). As described above, the positive electrode layer can be formed by compression molding a powder of the positive electrode active material or a positive electrode mixture (containing the powder of the positive electrode active material, additives, and the like).

A material that can be used as the positive electrode active material in an all-solid-state battery can be used as the positive electrode active material. In the case of an all-solid-state lithium-ion battery, examples of the positive electrode active material include lithium-containing complex oxides and compounds other than oxides. Examples of the lithium-containing complex oxides include lithium cobalt oxide, lithium nickel oxide, lithium manganese oxide, and other lithium-containing complex oxides (LiNi_{0.8}Co_{0.15}Al_{0.05}O₂ and the like). Examples of the compounds other than oxides include olivine compounds (LiMPO₄), and sulfur-containing compounds (Li₂S and the like). Note that in the above formula, M represents a transition metal. The positive electrode active material may be used alone or in a combination of two or more types.

When a powdered positive electrode active material is used, an average particle diameter of the positive electrode active material may be, for example, 3 µm or more or 4 µm or more, and may be 15 µm or less or 11 µm or less. In this specification, the average particle diameter is a median diameter (D50) in a volume-based particle size distribution measured using a laser diffraction particle size distribution measuring device.

### (Negative Electrode Layer)

The negative electrode layer contains a negative electrode active material, and may contain other components as necessary. Examples of the other components include known components used for a negative electrode in an all-solid-state battery. The negative electrode layer may contain the negative electrode active material and a solid electrolyte exhibiting lithium ion conductivity. Normally, the negative electrode active material is used in the form of particles (powder). As described above, the negative electrode layer can be formed by compression molding a powder of the negative electrode active material or a negative electrode mixture (containing the powder of the negative electrode active material, additives, and the like).

A material that can be used as the negative electrode active material in an all-solid-state battery can be used as the negative electrode active material. In the case of an all-solid-state lithium-ion battery, a predetermined material (such as a carbonaceous material, a metal or semimetal element or alloy, or a compound) that can reversibly store and release lithium ions can be used as the negative electrode active material. Examples of the carbonaceous material include graphite (such as natural graphite and artificial graphite), hard carbon, and amorphous carbon. Examples of the metal or semimetal element or alloy include lithium metal or alloy, and Si element. Examples of the compound include oxides (such as titanium oxide and silicon oxide), sulfides, nitrides, hydrates, and silicides (such as lithium silicide). The negative electrode active material may be used alone or in a combination of two or more types. For example, a silicon oxide and a carbonaceous material may be used in combination. As the negative electrode active material, particles containing graphite particles and amorphous carbon covering the graphite particles may be used.

When a powdered negative electrode active material is used, an average particle diameter of the negative electrode active material may be, for example, 3 µm or more or 4 µm or more, and 50 µm or less or 30 µm or less.

### (Solid Electrolyte Layer)

The solid electrolyte layer, which is disposed between the positive electrode and the negative electrode, contains a solid electrolyte that conducts charge carriers. Normally, the solid electrolyte is used in the form of particles (powder). As described above, the solid electrolyte layer can be formed by compression molding a material containing a solid electrolyte powder.

A material that can be used as the solid electrolyte in an all-solid-state battery can be used for the solid electrolyte. In the case of an all-solid-state lithium-ion battery, a substance having lithium ion conductivity can be used for the solid electrolyte. Examples of such a solid electrolyte include inorganic solid electrolytes such as sulfides (sulfide-based solid electrolytes) and hydrides (hydride-based solid electrolytes).

Examples of the sulfides include Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, and LiX-Li₂S-B₂S₃ (X: I, Br, or Cl). Examples of the hydrides include LiBH₄-LiI-based complex hydrides and LiBH₄-LiNH₂-based complex hydrides.

### (Positive Electrode Current Collector)

A metal layer (positive electrode current collector) is usually placed on the outer side of the positive electrode layer of the power generation element. A metal foil may be used for the metal layer (positive electrode current collector). Examples of materials for the positive electrode current collector (for example, the metal foil) include aluminum, magnesium, stainless steel, titanium, iron, cobalt, zinc, tin, and alloys of these.

### (Negative Electrode Current Collector)

A metal layer (negative electrode current collector) is usually placed on the outer side of the negative electrode layer of the power generation element. A metal foil may be used for the metal layer (negative electrode current collector). Examples of materials for the metal layer (negative electrode current collector) include copper, nickel, stainless steel, titanium, and alloys of these.

Note that when manufacturing a solid-state battery other than an all-solid-state battery, a power generation element corresponding to that solid-state battery is used as the power generation element. A power generation element of a known solid-state battery other than an all-solid-state battery may be used as the power generation element of the solid-state battery other than an all-solid-state battery. As long as a laminate including such a power generation element can be divided in the dividing step, the manufacturing method (M) can be used. Examples of the laminate that can be divided in the dividing step include a laminate in which each of the positive electrode layer, the solid electrolyte layer, and the negative electrode layer is formed of a solid or semi-solid. Such a laminate may be a laminate in which at least one layer (for example, all layers) of the positive electrode layer, the solid electrolyte layer, and the negative electrode layer is formed of a solid.

### (Solid-state Battery Manufacturing Device)

The manufacturing device according to the present embodiment is a device for manufacturing a solid-state battery (for example, an all-solid-state battery). The manufacturing device may be referred to below as the "manufacturing device (D)". The manufacturing device (D) makes it possible to easily implement the manufacturing method (M). However, the manufacturing method (M) may be implemented by a device other than the manufacturing device (D). Note that since matters described for the manufacturing method (M) can also be applied to the manufacturing device (D), duplicated explanations may be omitted. In addition, matters described for the manufacturing device (D) may be applied to the manufacturing method (M).

The manufacturing device (D) is a device for manufacturing a solid-state battery. The manufacturing device (D) performs the step of dividing the laminate including the power generation element. The manufacturing device (D) includes the first die on which the laminate is placed, the second die, and the drive mechanism for reversibly bringing the first die and the second die closer to each other. The power generation element includes the positive electrode layer, the negative electrode layer, and the solid electrolyte layer disposed between the positive electrode layer and the negative electrode layer. The laminate has the main surface SA1 and the main surface SA2. The solid electrolyte layer has the main surface SB1 on the main surface SA1 side and the main surface SB2 on the main surface SA2 side. Descriptions regarding the first die, the second die, and the laminate in the manufacturing method (M) can be applied to the first die, the second die, and the laminate.

In the manufacturing device (D), with the laminate placed on the placement surface of the first die so that the main surface SA1 is closer to the first die than the main surface SA2, the laminate is divided by the drive mechanism bringing the cutting edge (second die) and the first die closer to each other so that the cutting edge of the second die approaches the first die from the main surface SA2 side (dividing step). In the dividing step, the laminate is divided by the drive mechanism bringing the cutting edge and the first die closer to each other in the range where the at least one part (P) of the cutting edge does not pass the position of the main surface SA1 of the laminate.

The manufacturing device (D) can perform the manufacturing method (M). Therefore, the manufacturing device (D) can manufacture solid-state batteries that are less susceptible to short circuits between the positive electrode layer and the negative electrode layer with good yield. That is, the manufacturing device (D) can manufacture solid-state batteries with high characteristics with good yield.

In the dividing step, the drive mechanism moves the first die and/or the second die. Usually, the second die is the upper die, and the drive mechanism moves only the second die.

The same dies as known lower and upper dies (die and punch) used for shearing a metal sheet, or the like may be used as the first die and the second die.

The first die has the placement surface on which the laminate is placed. An end portion of the placement surface functions as the shoulder (cutting edge) that faces the cutting edge of the second die. When the cutting edge of the second die approaches the placement surface of the first die, the laminate is divided by being cut between the shoulder of the first die and the cutting edge of the second die.

There is no limitation on the drive mechanism as long as it can move the die. A drive mechanism used in conventional shearing devices (or press machines) may be used as the drive mechanism. The drive mechanism may be a mechanical (for example, an electric) drive mechanism or a hydraulic drive mechanism. Alternatively, the drive mechanism may be a pneumatic drive mechanism. That is, the drive mechanism may reversibly bring the first die and the second die closer to each other by air pressure.

The drive mechanism may be any one of an electric linear actuator, a hydraulic linear actuator, and a pneumatic linear actuator (an air cylinder). A known actuator or a commercially available actuator can be used. Of these, the pneumatic linear actuator (the air cylinder) is preferred because the device can be made smaller and lighter.

The position (closest position) reached by the cutting edge of the second die in the dividing step can be a position exemplified in the manufacturing method (M). For example, in the dividing step performed by the manufacturing device (D), the drive mechanism brings the cutting edge of the second die and the first die closer to each other so that at least one of the above conditions (1) to (4) is satisfied. For example, the drive mechanism may divide the laminate by bringing the cutting edge and the first die closer to each other within the range where the at least one part (P) of the cutting edge of the second die does not reach the position of the main surface SB1 of the solid electrolyte layer.

Furthermore, in the dividing step performed by the manufacturing device (D), the drive mechanism may bring the cutting edge of the second die and the first die closer to each other so that any one of the above conditions (5) to (7) is satisfied.

There is no particular limitation on a method of stopping the cutting edge of the second die at the closest position. The drive mechanism may be set to stop the cutting edge of the second die at the desired closest position. Alternatively, the position of the drive mechanism may be adjusted to stop the cutting edge of the second die at the desired closest position. Alternatively, a stopper may be used that abuts against the second die (or a part of the drive mechanism) to stop movement of the second die when the cutting edge of the second die reaches the closest position.

It is preferable that the ratio L1/L0 of the length L1 of the at least one part (P) of the cutting edge of the second die to the length L0 of the cutting edge satisfies the above-mentioned relationship.

In the manufacturing device (D), the moving range of the cutting edge of the second die may be adjusted based on the measured value of the distance (interlayer distance) between one main surface (for example, the main surface SA1 or the main surface SA2) of the laminate and a main surface (for example, the main surface SB1 or the main surface SB2) of a layer constituting the laminate. This adjustment makes it possible to accurately move the cutting edge of the second die within the desired range. The moving range of the cutting edge of the second die may be adjusted by at least one method selected from setting the drive mechanism, adjusting the position of the drive mechanism, and using the stopper.

In the manufacturing device (D), the laminate is preferably divided without short-circuits between the positive electrode layer and the negative electrode layer. Specifically, it is preferable that at least one of the above conditions (a) to (c) is satisfied.

There is no particular limitation on a distance G (a distance G described below) between the cutting edge of the second die and the shoulder of the first die, and it is a distance (spacing) that allows the dividing step to be performed. The distance G may be 200 µm or less, 100 µm or less, 50 µm or less, 20 µm or less, 10 µm or less, or 0 µm or less. The distance G may be -50 µm or more, -10 µm or more, or 0 µm or more. The distance G may be in a range of -50 to 100 µm, -10 to 50 µm, 0 to 50 µm, 0 to 20 µm, or 0 to 10 µm.

The manufacturing device (D) may include a fixing mechanism for fixing the laminate to the placement surface of the first die. There is no limitation on the fixing mechanism as long as it can fix the laminate. For example, a known fixing mechanism used in a shearing device may be used as the fixing mechanism. Examples of the fixing mechanism include a fixing member (for example, a pressing plate) and a vacuum chuck.

The first die is preferably sized so that a portion of the laminate adjacent to the dividing position is fully placed on the first die. The cutting edge of the second die is preferably sized to abut against the entire width of the laminate at the dividing position.

An angle α of a cross-section of the cutting edge of the second die (cross-section perpendicular to a direction in which the cutting edge extends) may be a right angle or an acute angle. The angle α may be 60° or greater, or 70° or greater, and may be in a range of 80° to 90° (for example, in a range of 85° to 90°).

The manufacturing device (D) may include a measuring instrument for measuring the electrical characteristics between the main surface SA1 and the main surface SA2 of the laminate. Then, as described above, the electrical characteristics between the main surface SA1 and the main surface SA2 of the laminate may be measured while the laminate is placed on the placement surface of the first die. Descriptions regarding the manufacturing method (M) can be applied to the types of electrical characteristics and the timing of measurement. The measuring instrument is selected depending on the type of electrical characteristics to be measured. Examples of the measuring instrument include a resistance meter and a voltmeter.

The first die and the second die may be electrically insulated. Since they are electrically insulated, it is easier to measure the electrical characteristics between the main surface SA1 and the main surface SA2 of the laminate.

The manufacturing device (D) includes a feed mechanism for moving the laminate on the first die, as necessary. The manufacturing device (D) may further include a control device for controlling mechanisms such as the drive mechanism and feed mechanism. There are no particular limitations on the feed mechanism and the control device, and mechanisms and control devices used in known shearing devices or press devices may be used, or they may be modified to fit the device according to the present embodiment and used. The control device (D) includes, for example, a storage device that stores programs for executing necessary processes such as the dividing step, and an arithmetic processing device for executing the programs.

The manufacturing device (D) may include, as necessary, a member for receiving the divided laminate (the laminate protruding from the first die), a transport mechanism for transporting the divided laminate, and the like. The manufacturing device (D) may further include, as necessary, an adjusting mechanism for adjusting the position of the drive mechanism. By adjusting the position of the drive mechanism with the adjusting mechanism, it is possible to adjust the distance G between the first die and the second die and/or the closest position of the cutting edge of the second die.

Examples of embodiments according to the present disclosure will be described in detail below with reference to the drawings. Descriptions of the above-mentioned embodiments can be applied to the manufacturing method and the manufacturing device described below, and they may be modified based on the descriptions above. Among the steps of the manufacturing method and the constituents of the manufacturing device described below, steps and constituents that are not essential to the manufacturing method and the manufacturing device of the present disclosure may be omitted. In addition, matters described below may be applied to the above-mentioned embodiments. Note that the following figures are schematic diagrams and are not drawn to actual scale. In the following figures, some members may be omitted for clarity.

### (First Embodiment)

In a first embodiment, an example of a first manufacturing method (M) and an example of the manufacturing device (D) used therein will be described. Note that in the following example, a method for manufacturing an all-solid-state battery including a laminate having a structure of positive electrode current collector/positive electrode layer/solid electrolyte layer/negative electrode layer/negative electrode current collector will be described. However, all-solid-state batteries including laminates having other structures and solid-state batteries other than all-solid-state batteries can also be manufactured in a similar manner.

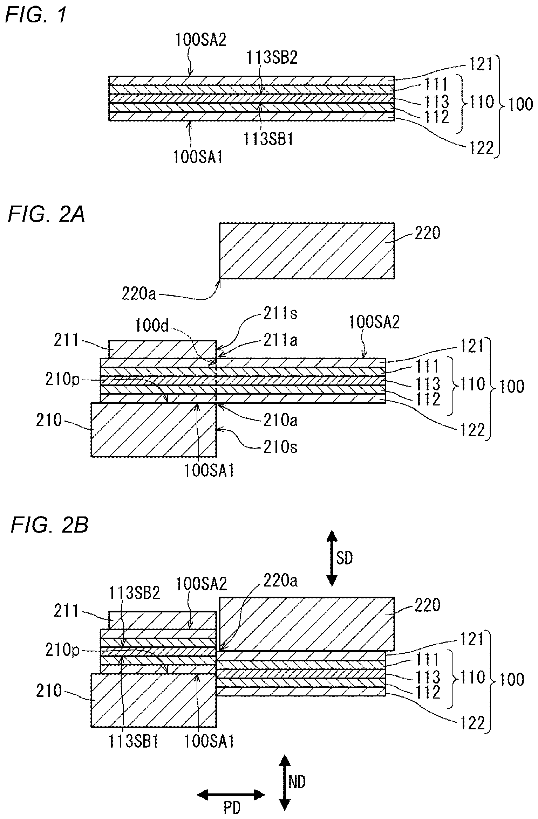

In the manufacturing method of the first embodiment, first, a laminate 100 is prepared as illustrated in FIG. 1. The laminate 100 includes a power generation element 110, a positive electrode current collector 121, and a negative electrode current collector 122. The power generation element 110 includes a positive electrode layer 111, a negative electrode layer 112, and a solid electrolyte layer 113 disposed therebetween. The laminate 100 can be formed by the method described above.

The laminate 100 has a main surface 100SA1 and a main surface 100SA2 opposite to the main surface 100SA1. The solid electrolyte layer 113 has a main surface 113SB1 on the main surface 100SA1 side and a main surface 113SB2 on the main surface 100SA2 side.

Next, as illustrated in FIG. 2, the laminate 100 is placed on a first die (lower die) 210 so that the main surface 100SA1 is closer to the first die 210 than the main surface 100SA2. Specifically, the laminate 100 is placed on the first die 210 so that a placement surface 210p of the first die 210 is in contact with the main surface 100SA1. Then, the laminate 100 is sandwiched and fixed between the first die 210 and a pressing member (fixing mechanism) 211. Specifically, an adjacent portion (adjacent portion 100a in FIG. 3) adjacent to a dividing position 100d of the laminate 100 is fixed. A portion (protruding portion 100b in FIG. 3) of the laminate 100 protruding from the first die 210 is not fixed.

The first die 210 has a shoulder (corner) 210a extending linearly. A second die (upper die) 220 includes a cutting edge 220a. The cutting edge 220a has a corner shape extending linearly. In the example described in the first embodiment, the shoulder 210a and the cutting edge 220a extend parallel to each other. Further, the cutting edge 220a extends parallel to the placement surface 210p. Note that these shapes can be changed depending on the shape of the dividing position 100d, and the like. The first die 210 and the second die 220 are electrically insulated. Further, the first die 210 and the pressing member 211 are electrically insulated.

FIG. 3 schematically illustrates placement of the laminate 100 and the first die 210 in FIG. 2A when viewed from above. FIG. 3 also illustrates an example of placement of the second die 220. In FIG. 3, the direction in which the dividing position 100d extends is a width direction WD, and the width of the laminate 100 in the width direction WD is illustrated as width W. The pressing member 211 preferably presses and fixes the laminate 100 over the entire width (width W) of the dividing position 100d. However, as long as the laminate 100 can be divided, only a portion of the entire width may be pressed and fixed. As illustrated in FIG. 2, it is preferable that the cutting edge 220a has a shape that comes into contact with the laminate 100 over the entire width of the laminate 100.

FIG. 3 illustrates the direction PD described below. FIG. 3 further illustrates the length (total length) L0 of the cutting edge 220a of the second die 220. Note that as described above, the cutting edge 220a refers to the corner of the second die 220 that comes into contact with the laminate 100 to divide the laminate 100 in the dividing step. In the first embodiment, a case will be described in which the entire cutting edge 220a moves within a predetermined position range. That is, in the first embodiment, a case will be described in which L1/L0=1.

The laminate 100 is divided along the linear dividing position 100d. In the example illustrated in FIG. 2A, the first die 210 and the pressing member 211 are arranged so that their respective linear shoulders 210a and 211a align with the dividing position 100d. As illustrated in FIG. 2A, an end surface 210s of the first die 210 and an end surface 211s of the pressing member 211 may be flush with each other. Alternatively, the end surface 211s may be positioned so that it is above and overlaps the first die 210 but is offset from the end surface 210s.

Next, as illustrated in FIG. 2B, the laminate 100 is divided by bringing the cutting edge 220a of the second die 220 closer to the first die 210 from the main surface 100SA2 side. In the dividing step, the laminate 100 is divided by bringing the cutting edge 220a closer to the first die 210 within a range where the cutting edge 220a does not pass the position of the main surface 100SA1 (the position of the placement surface 210p). In FIG. 2B, a moving direction SD of the second die 220 is illustrated by an arrow.

A direction parallel to the placement surface 210p of the first die 210 and orthogonal to the shoulder 210a of the first die 210 is defined as the direction PD. Further, a direction perpendicular to the surface of the laminate 100 placed on the first die 210 is defined as a direction ND. In the example illustrated in FIG. 2B, the direction SD and the direction ND are substantially parallel to each other.

The distance G (distance in the direction PD) between the cutting edge 220a of the second die and the shoulder 210a of the first die 210 may be any distance that allows the dividing step to be performed. The distance G may be in the range described above. Note that the distance G is positive in a direction away from the first die 210. A negative distance G means that the first die 210 and the second die 220 partially overlap each other when viewed from the second die 220 side (viewed from above). The distance G can also be considered as a minimum value of the coordinate of the cutting edge 220a on a coordinate axis in the direction PD, with the position of the shoulder 210a as the origin and the direction in which the laminate 100 protrudes from the placement surface 210p of the first die 210 as positive. In addition, a maximum value Gmax of the coordinate of the cutting edge 220a on the coordinate axis in the direction PD, with the position of the shoulder 210a as the origin and the direction in which the laminate 100 protrudes from the placement surface 210p of the first die 210 as positive, and an average value Gave of the coordinate may be within a range exemplified for the distance G.

In the manufacturing method and the manufacturing device of the first embodiment, it is possible to divide the laminate 100 even when the cutting edge 220a does not pass the position of the shoulder 210a of the first die 210. Therefore, unlike conventional shearing devices, the distance G can be 0 µm or less. By reducing the distance G, the laminate can be divided more appropriately.

FIG. 2B illustrates an example of a state when the cutting edge 220a reaches the position (closest position) closest to the placement surface 210p of the first die 210 in the dividing step. In the example illustrated in FIG. 2B, the closest position is between the position of the main surface 113SB1 and the position of the main surface 113SB2 of the solid electrolyte layer. In conventional technical common sense, it has been believed that it is necessary to move the cutting edge 220a below the placement surface 210p. However, after study, it has been found that the laminate 100 can be divided without moving the cutting edge 220a below the placement surface 210p (or the main surface 100SA1).

Here, the position of the cutting edge 220a means the coordinate position (height position) of the cutting edge 220a on a coordinate axis in the moving direction SD of the second die 220 (the cutting edge 220a) in the dividing step.

FIG. 4 illustrates an example of a case where the closest position of the cutting edge 220a is located between the placement surface 210p (or the main surface 100SA1) and the main surface 113SB1 of the solid electrolyte layer 113. FIG. 4 illustrates a state when the cutting edge 220a is at the closest position. As illustrated in FIG. 4, the cutting edge 220a may be closer to the placement surface 210p (or the main surface 100SA1) than the main surface 113SB1 of the solid electrolyte layer 113.

The laminate 100 can be divided in the above-described manner. After the laminate 100 is divided to the final size, connection to a lead tab and enclosure in an outer casing are performed as necessary. In this manner, a solid-state battery can be manufactured.

In the first embodiment, a case in which the laminate 100 includes the positive electrode current collector 121 and the negative electrode current collector 122 has been described. However, the laminate 100 need not include one or both of the positive electrode current collector 121 and the negative electrode current collector 122. In this case, the current collector or collectors are formed as necessary after the division of the laminate 100 is completed.

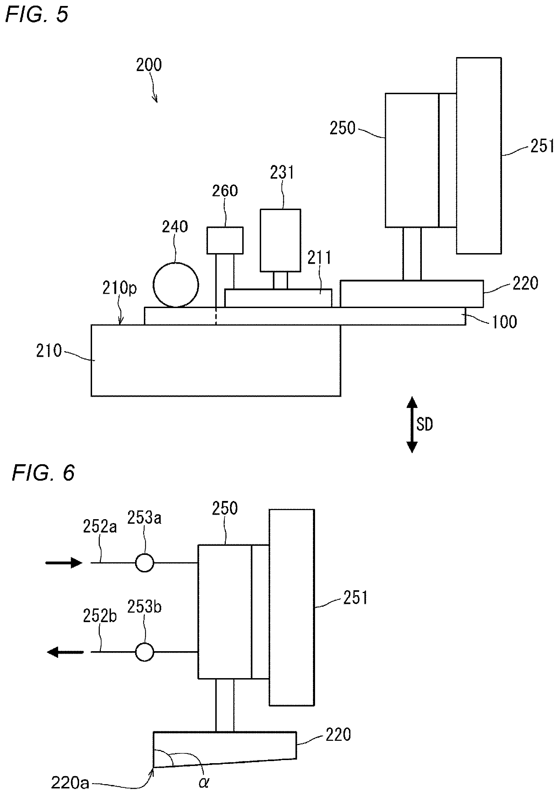

FIG. 5 illustrates an example of a manufacturing device 200 including the first die 210, the pressing member 211, and the second die 220. The manufacturing device 200 in FIG. 5 includes the first die 210, the pressing member 211, the second die 220, drive mechanisms 231 and 250, a roller 240 (feed mechanism), a position adjusting mechanism 251, and a measuring instrument 260. The drive mechanism 231 fixes and releases the laminate 100 by moving the pressing member 211. The roller 240 feeds the laminate 100 and moves it to an appropriate position. The position adjusting mechanism 251 can move the drive mechanism 250 in the direction SD and fix it. The position adjusting mechanism 251 can adjust the closest position. For example, the interlayer distance of the laminate and/or the thickness of the laminate may be measured, and the closest position may be adjusted based on the measured value.

Note that the position adjusting mechanism 251 is unnecessary when there is no need to change the closest position or when the closest position can be adjusted only by the drive mechanism 250. Further, the closest position can also be changed by moving the position of the placement surface 210p of the first die 210.

The drive mechanism 250 lowers and raises the second die 220 in the direction SD of an arrow in FIG. 5. The drive mechanism 250 (manufacturing device 200) performs the dividing step by lowering the second die 220, to bring the cutting edge 220a closer to the first die 210 from the main surface 100SA2 side (see FIGS. 2A and 2B). As described above, the laminate 100 is divided by the drive mechanism 250 (manufacturing device 200) moving the cutting edge 220a to a predetermined position.

The measuring instrument 260 measures the electrical characteristics of the laminate 100. FIG. 5 illustrates an example of a case where the pressing member 211 and the first die 210 have conductivity. The measuring instrument 260 is connected to the pressing member 211 and the first die 210, and measures the electrical characteristics of the laminate 100 via them. Note that the electrical characteristics of the laminate 100 may also be measured by contacting the laminate 100 with a probe or the like.

FIG. 6 illustrates an example of a peripheral configuration of the drive mechanism 250 when the drive mechanism 250 is an air cylinder. The device of the example in FIG. 6 includes gas flow paths 252a and 252b connected to the drive mechanism 250, and speed controllers 253a and 253b provided at intermediate positions on the respective gas flow paths. Gas flowing through the gas flow paths 252a and 252b moves the second die 220 up and down.

FIG. 6 illustrates an example in which the angle α of the cross-section of the cutting edge 220a of the second die 220 is an acute angle. The angle α is an angle of the cutting edge 220a in a cross-section perpendicular to the direction in which the cutting edge 220a extends.

Note that in the above description, only an example in which only one side of the laminate is divided at a time has been described. However, it is also possible to divide a plurality of sides of the laminate by moving the second die once. For example, two second dies described above are arranged so that their shoulders form an L-shape. Similarly, the first die and the pressing member are also arranged to correspond to the second dies. At this time, the two second dies are arranged so that their positions in the direction ND are different (that is, they are arranged so that their heights are different). By using the second dies, the first die, and the pressing member, it is also possible to divide two sides of the laminate by moving the second die once. In a similar manner, it is also possible to divide three or four sides of the laminate by moving the second die once. Note that when the sides do not intersect with each other, they can be divided simultaneously without setting the positions in the direction ND different.

### [Industrial Applicability]

The present disclosure can be used for a solid-state battery, a solid-state battery manufacturing method, and a solid-state battery manufacturing device.

Although the present invention has been described with respect to a presently preferred embodiment, such disclosure should not be interpreted as limiting. Various modifications and alterations will no doubt become apparent to those skilled in the art to which the present invention pertains upon reading the above disclosure. Accordingly, the appended claims should be construed as including all modifications and alterations without departing from the true spirit and scope of the present invention.

### [Reference Signs List]

100: laminate, 100d: dividing position, 100SA1, 100SA2, 113SB1, 113SB2: main surface, 110: power generation element, 111: positive electrode layer, 112: negative electrode layer, 113: solid electrolyte layer, 200: manufacturing device, 210: first die, 210p: placement surface, 220: second die, 220a: cutting edge, 250: drive mechanism, 260: measuring instrument.

## Claims

1. A solid-state battery manufacturing method using a laminate including a power generation element,
the power generation element including a positive electrode layer, a negative electrode layer, and a solid electrolyte layer disposed between the positive electrode layer and the negative electrode layer,
the laminate having a main surface SA1 and a main surface SA2 opposite to the main surface SA1, and
the solid electrolyte layer having a main surface SB1 on the main surface SA1 side and a main surface SB2 on the main surface SA2 side,
the manufacturing method comprising:
a placing step of placing the laminate on a placement surface of a first die so that the main surface SA1 is closer to the first die than the main surface SA2; and
a dividing step of dividing the laminate by bringing a cutting edge of a second die and the first die closer to each other so that the cutting edge of the second die approaches the first die from the main surface SA2 side,
wherein in the dividing step, the laminate is divided by bringing the cutting edge and the first die closer to each other within a range where at least one part of the cutting edge does not pass a position of the main surface SA1.

2. The manufacturing method according to claim 1, wherein in the dividing step, the laminate is divided by bringing the cutting edge and the first die closer to each other within a range where the at least one part of the cutting edge does not reach the position of the main surface SA1.

3. The manufacturing method according to claim 1, wherein in the dividing step, the laminate is divided by bringing the cutting edge and the first die closer to each other within a range where the at least one part of the cutting edge does not reach a position of the main surface SB1.

4. The manufacturing method according to claim 1, wherein in the dividing step, the laminate is divided by bringing the cutting edge and the first die closer to each other within a range where the at least one part of the cutting edge does not reach a position of the main surface SB2.

5. The manufacturing method according to claim 1, wherein in the dividing step, the cutting edge and the first die are brought closer to each other so that the at least one part of the cutting edge reaches a position on the placement surface side relative to a position of the main surface SB2.

6. The manufacturing method according to claim 1, wherein the dividing step is performed in a state where the positive electrode layer and the negative electrode layer are prevented from being short-circuited.

7. The manufacturing method according to any one of claims 1 to 5, wherein in the dividing step, the laminate is divided in a state of being fixed to the placement surface.

8. The manufacturing method according to claim 1, wherein the laminate further includes at least one metal layer.

9. A solid-state battery manufacturing device that performs a step of dividing a laminate including a power generation element, the manufacturing device comprising:
a first die on which the laminate is placed; a second die; and a drive mechanism for reversibly bringing the first die and the second die closer to each other,
wherein the power generation element includes a positive electrode layer, a negative electrode layer, and a solid electrolyte layer disposed between the positive electrode layer and the negative electrode layer,
the laminate has a main surface SA1 and a main surface SA2,
the solid electrolyte layer has a main surface SB1 on the main surface SA1 side and a main surface SB2 on the main surface SA2 side,
in a state where the laminate is placed on a placement surface of the first die so that the main surface SA1 is closer to the first die than the main surface SA2, the laminate is divided by the drive mechanism bringing a cutting edge of the second die and the first die closer to each other so that the cutting edge of the second die approaches the first die from the main surface SA2 side, and
the laminate is divided by the drive mechanism bringing the cutting edge and the first die closer to each other within a range where at least one part of the cutting edge does not pass a position of the main surface SA1.

10. The manufacturing device according to claim 9, wherein a distance by which the cutting edge is separated from a shoulder of the first die in a direction parallel to the placement surface is in a range of -50 µm to 100 µm.
